# DEMANDE DE BREVET EUROPEEN

(11) **EP 3 106 358 A1**
(43) Date de publication de la demande: **21.12.2016**
(21) Numéro de dépôt: 16174385.1
(22) Date de dépôt: 14.06.2016
(51) Int. Cl.: B60S 1/38

(54) **LAME DE BALAI D'ESSUIE-GLACE COMPORTANT UN MATÉRIAU THERMOCONDUCTEUR**

(30) Priorité: 16.06.2015 FR 1555477
(71) Demandeur: Valeo Systèmes d'Essuyage, 78322 Le Mesnil Saint Denis (FR)
(72) Inventeur: CAILLOT, Gérald, 78720 CERNAY LA VILLE (FR); IZABEL, Vincent, 91380 CHILLY MAZARIN (FR); JARASSON, Jean-Michel, 78321 LE MESNIL SAINT DENIS (FR); BOURSIER, Stéphane, TOKYO, 1070052 (JP)
(74) Mandataire: Callu Danseux, Violaine

(57) **Abrégé**

L'invention concerne un lame d'essuyage (42) pour un balai d'essuie-glace, qui comporte au moins un talon (40) et une lèvre inférieure (46) s'étendant à partir du talon (40) et qui est destinée à venir en contact avec une surface (22) à essuyer, caractérisée en ce qu'au moins une partie de la lame (42) comprend un matériau thermoconducteur (48) métallique, et/ou est recouverte d'un matériau thermoconducteur métallique.

## Description

L'invention concerne une lame pour un balai d'essuie-glace, en particulier de véhicule automobile.

L'invention concerne plus particulièrement une lame d'essuyage pour un balai d'essuie-glace, qui comporte au moins un talon supérieur et une lèvre inférieure s'étendant à partir du talon et qui est destinée à venir en contact avec une surface à essuyer, par exemple un pare-brise du véhicule automobile.

Une telle lame équipe de manière connue un balai d'essuie-glace chauffant. Un tel balai d'essuie-glace comporte au moins un corps principal qui reçoit au moins un élément chauffant qui s'étend sensiblement suivant la longueur du balai, et une lame d'essuyage, agencée à proximité de l'élément chauffant, ladite lame occupant une orientation sensiblement perpendiculaire à la surface à essuyer. La lame comporte un talon supérieur par laquelle elle est fixée au balai et une lèvre inférieure, s'étendant à partir du talon supérieur et qui est destinée à venir en contact avec la surface à essuyer.

On connait de nombreux exemples de balais d'essuie-glace comportant des moyens de chauffage.

Le document WO/2011/098261 décrit par exemple un balai d'essuie-glace comportant une lame recevant une vertèbre de maintien, qui est par conséquent insérée dans la lame, et des éléments chauffants agencés au contact de la vertèbre, qui permettent d'assurer un chauffage de la lame d'essuyage. Dans un tel dispositif, les moyens de chauffage en contact avec la vertèbre transmettent donc directement à la lame la chaleur qu'ils émettent, de sorte que la lame est chauffée relativement rapidement.

Selon la manière dont elle est montée dans un balai d'essuie-glace, une lame d'essuyage n'est pas toujours agencée à proximité immédiate de l'élément chauffant, ce qui pose parfois des problèmes de transmission de la chaleur émise par ledit élément chauffant à la lame.

Selon une conception connue, on a proposé un essuie-glace comportant un déflecteur aérodynamique qui reçoit un corps principal, ce corps recevant dans une partie supérieure située à l'intérieur du déflecteur au moins une vertèbre au contact de laquelle est agencé un élément chauffant, et dans une partie inférieure, le talon de la lame d'essuyage. La lame n'est donc pas placée directement au contact de la vertèbre. Le talon de la lame est en effet maintenu dans une rainure complémentaire formée dans le corps principal qui est distincte de celle qui reçoit la vertèbre et l'élément chauffant. Dans un tel dispositif, la chaleur émise par les moyens de chauffage transite donc par le corps principal avant d'atteindre le talon de la lame.

Or, dans cette configuration, les dimensions des points de contact entre le talon de la lame et la rainure du corps principal sont relativement restreintes, de sorte que la conduction de la chaleur du corps principal à la lame s'avère difficile.

Par ailleurs, le matériau de la lame, qui est réalisé habituellement à base d'élastomère ou de caoutchouc, est d'une conductivité très faible.

Ainsi, dans des conditions hivernales par temps de gel, un tel essuie-glace présente des risques élevés de collage sur le pare-brise. Le collage est préjudiciable à la longévité de la lame du balai d'essuie-glace, car l'actionnement d'un balai d'essuie-glace collé sur un pare-brise givré ou gelé conduit à un arrachement de l'extrémité de la lèvre, dont les performances se retrouvent alors rapidement dégradées et la rendent impropre à un essuyage satisfaisant.

Par ailleurs, une telle lame comporte généralement entre le talon et la lèvre une zone d'étranglement de largeur réduite, aussi connue sous le nom de charnière, qui est destinée à conférer une souplesse à la lèvre par rapport au talon. La glace ou la neige est susceptible de venir se loger dans cette zone d'étranglement, ce qui peut perturber le bon pivotement de ladite charnière et avoir pour conséquence des défauts d'essuyage.

Pour accélérer le réchauffage de la lame, et ainsi remédier à cet inconvénient, une solution consiste à améliorer la conductivité thermique de la lame, sensiblement depuis son talon jusqu'à la lèvre. Le réchauffage de la lame permet également de faire fondre la neige ou la glace au niveau de la charnière et par conséquent d'éviter les défauts d'essuyage à froid.

Dans ce but, l'invention comporte une lame d'essuyage du type décrit précédemment, caractérisée en ce qu'au moins une partie de la lame comprend un matériau thermoconducteur métallique, et/ou est recouverte d'un matériau thermoconducteur métallique.

Selon d'autres caractéristiques de l'invention :
- au moins le talon comprend ledit matériau thermoconducteur métallique et/ou est recouvert dudit matériau thermoconducteur métallique,
- la lèvre comprend ledit matériau thermoconducteur métallique et/ou est recouverte dudit matériau thermoconducteur métallique,
- le matériau thermoconducteur métallique présente une conductivité thermique supérieure à 100W/mK,
- le matériau thermoconducteur comporte du cuivre, de l'aluminium ou de l'argent,
- un matériau élastomère de la lame comporte le matériau thermoconducteur métallique,
- la lame comporte un revêtement en matériau thermoconducteur métallique recouvrant ladite lame,
- le matériau thermoconducteur métallique est un dépôt d'une composition de particules métalliques en solution,
- des flancs latéraux de la lèvre sont revêtus du matériau thermoconducteur métallique et lesdits flancs sont recouverts d'un matériau de protection dudit matériau thermoconducteur métallique,
- la lame comporte un insert métallique en matériau thermoconducteur métallique intégré dans ladite lame,
- l'insert métallique comporte au moins une première partie qui s'étend au contact d'une surface d'extrémité libre du talon et une seconde partie, qui s'étend dans l'épaisseur de la lame,
- la seconde partie s'étend suivant l'orientation générale de la lame, sensiblement suivant une ligne médiane de la lame, en direction d'une extrémité de la lèvre,
- la seconde partie de l'insert métallique s'étend au moins en partie dans la lèvre,

L'invention concerne aussi un procédé de fabrication d'une lame d'essuyage du type décrit précédemment, caractérisé en ce que l'on prépare une composition thermoconductrice comportant une poudre métallique, dispersée en solution dans un liquide vecteur et un agent gélifiant, puis on enduit au moins une partie de la lame d'essuyage avec ladite composition, ou on immerge ladite au moins une partie de la lame dans ladite composition, ou on pulvérise ladite composition sur ladite au moins une partie de lame d'essuyage, puis en ce que l'on fait sécher ladite lame d'essuyage.

Selon d'autres caractéristiques de ce procédé :
- on fait sécher la lame à température ambiante ou, pour accélérer son séchage, sous un flux d'air chaud de séchage.
- l'étape d'induction, d'immersion ou de pulvérisation est réalisée pour revêtir une jumelle comportant deux lames d'essuyage réunies par leurs lèvres, le procédé comportant en outre une étape de découpe de la jumelle à la jonction des deux lèvres pour obtenir deux lames.

L'invention concerne aussi un autre procédé de fabrication d'une lame d'essuyage du type décrit précédemment, caractérisé en ce que l'on extrude ou injecte un matériau élastomère de la lame autour d'un insert métallique en matériau thermoconducteur.

L'invention concerne enfin un balai d'essuie-glace, en particulier de véhicule automobile, comportant au moins un corps principal qui reçoit au moins un élément chauffant qui s'étend sensiblement sur la longueur du balai, et une lame d'essuyage du type décrit précédemment, dont le talon est reçu dans ledit corps principal.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe transversale d'un balai d'essuie-glace selon un état antérieur de la technique comportant une lame selon l'invention ;
- les figures 2 et 3 sont des vues en coupe transversale de deux variantes d'un premier mode de réalisation de la lame ;
- les figures 4 et 5 sont des vues en coupe transversale d'une première et d'une deuxième variantes d'un deuxième mode de réalisation de la lame ;
- les figures 6 et 7 sont des vues en coupe transversale des étapes d'un procédé d'obtention d'une troisième variante du deuxième mode de réalisation de la lame ;
- la figure 8 est une vue en coupe transversale d'une quatrième variante d'un deuxième mode de réalisation de la lame ; et
- la figure 9 est une vue en coupe transversale d'un troisième mode de réalisation de la lame.

Dans la description qui va suivre, des chiffres de référence identiques désignent des pièces identiques ou ayant des fonctions similaires.

Il faut noter que les figures exposent l'invention de manière détaillée pour mettre en oeuvre l'invention, lesdites figures pouvant bien entendu servir à mieux définir l'invention le cas échéant.

De plus, dans la description qui suit, les dénominations longitudinales, latérales ou verticales se réfèrent à l'orientation du balai d'essuie-glace ou du bras d'entraînement selon l'invention. La direction longitudinale correspond à l'axe principal du balai ou du bras dans lequel il s'étend, alors que les directions référencées comme supérieures ou inférieures correspondent à des orientations perpendiculaires au plan du pare-brise sur lequel glisse le balai d'essuie-glace, la dénomination inférieure contenant le plan du pare-brise. Enfin, les orientations latérales correspondent à des droites qui croisent la direction longitudinale et la direction verticale.

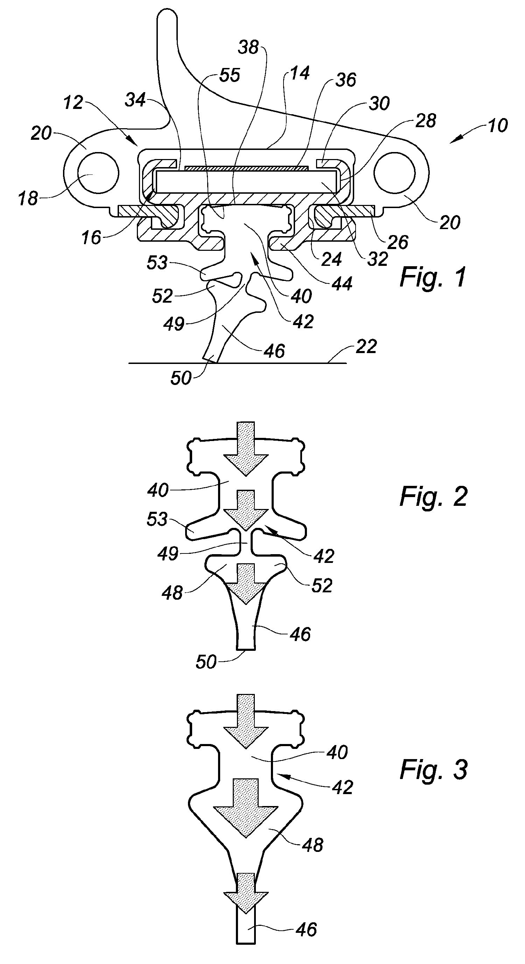

On a représenté à titre d'exemple à la figure 1 un balai 10 d'essuie-glace, en particulier de véhicule automobile, réalisé de manière connue de l'état de la technique. Le balai 10 est destiné à balayer un pare-brise 22. Le balai 10 comporte pour l'essentiel un déflecteur aérodynamique 12, aussi connu sous la désignation anglo-saxonne de "spoiler" qui reçoit dans un logement 14 un corps principal 16 du balai 10. Le déflecteur aérodynamique 12 comporte par ailleurs par exemple une paire de conduits 18, agencés aux extrémités transversales 20 du déflecteur 12, qui sont destinés à permettre l'acheminement d'un liquide de lavage pour permettre sa pulvérisation sur le pare-brise 22 à proximité immédiate du balai 10 par l'intermédiaire de buses (non représentées) percées dans lesdits conduits 18.

Il sera compris que le balai 10 qui a été représenté à la figure 1 n'est pas limitatif de l'invention. En particulier, le déflecteur 12 du balai 10 pourrait ne pas comporter de conduits tels que les conduits 18, ou comporter en variante une rampe d'arrosage externe accolée et non pas intégrée au déflecteur 12 du balai 10.

Le corps principal 16 comporte deux rainures latérales 24 d'orientation axiale, ouvertes vers l'extérieur du corps principal, qui reçoivent par emboîtement des ailes internes 26 du déflecteur 12 pour assurer la fixation du corps principal 16 au déflecteur 12.

Le corps principal 16 comporte un logement supérieur 28, bordé par des ailes latérales 30, qui reçoit au moins une vertèbre 32 sur une face supérieure 34 de laquelle repose un élément chauffant 36, qui est par exemple constitué d'une film chauffant résistif. L'élément chauffant 36 s'étend sensiblement sur la longueur du balai 10.

Le balai 10 qui a été représenté à la figure 1 à titre d'exemple ne comporte qu'une vertèbre 22, mais il sera compris qu'il pourrait comporter deux ou plusieurs vertèbres, dont au moins une reçoit un élément chauffant 36, sans changer la nature de l'invention.

Le corps principal 16 comporte un logement inférieur 38 qui reçoit un talon supérieur 40 d'une lame 42 d'essuyage. Le talon 40 est maintenu dans le logement 38 par des ailes inférieures 44 du logement 38. Dans le cadre de son utilisation, la lame d'essuyage 42 est d'orientation sensiblement perpendiculaire ou légèrement inclinée à la surface à essuyer, en l'occurrence ici le pare-brise 22. Elle comporte une lèvre inférieure 46 s'étendant à partir du talon supérieur 40 et qui est destinée à venir en contact avec ici le pare-brise 22.

Dans la configuration qui a été décrite ci-dessus, la partie de la lame 42 qui s'étend le plus à proximité de l'élément chauffant 36 est le talon 40, et c'est par conséquent cette partie de la lame 42 qui est la plus à même de recevoir des calories provenant de l'élément chauffant 36.

Aussi, conformément à l'invention, pour améliorer le réchauffage de la lame 42, au moins une partie de la lame 42 comprend un matériau thermoconducteur métallique 48 et/ou est recouverte dudit matériau thermoconducteur métallique 48.

Dans la configuration qui a été représentée sur les figures, c'est donc au moins le talon 40 de la lame 42 qui comprend le matériau thermoconducteur 48 et/ou en est recouvert. Il sera compris que dans le cas d'une implantation différente de l'élément chauffant 36 à proximité d'une autre partie de la lame 42, c'est au moins cette autre partie qui pourrait comprendre le matériau thermoconducteur 48 ou en serait recouverte.

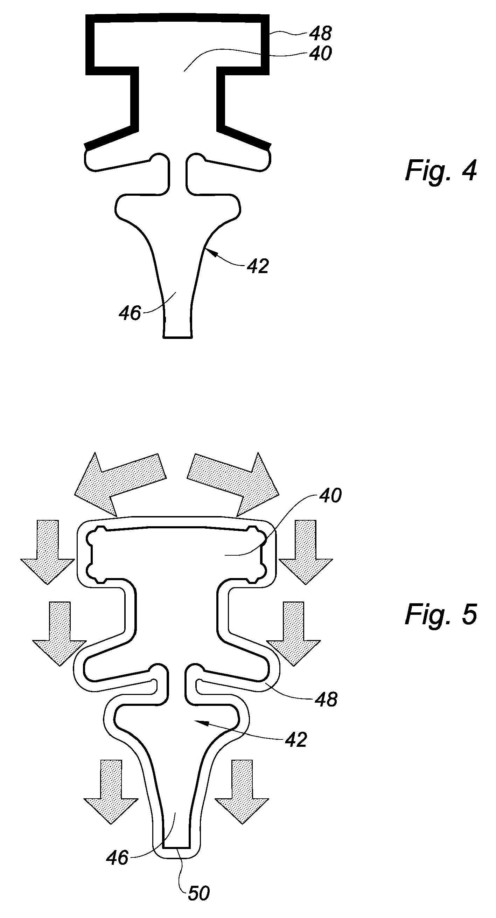

Cette configuration a par exemple été représentée à la figure 4, qui représente une lame 42 dont seul le talon 40 comporte le matériau thermoconducteur 48. Le détail du matériau thermoconducteur métallique 48 de ce mode de réalisation sera décrit ultérieurement dans la suite de la présente description.

Toutefois, dans les modes de réalisation préférés de l'invention, la lèvre 46 comprend aussi ledit matériau thermoconducteur métallique 48 et/ou en est recouverte. De cette manière, la conductivité thermique de l'ensemble de la lame 42 est améliorée, ce qui permet d'autoriser la propagation des calories jusqu'à l'extrémité de la lèvre 46 et d'accélérer son décollement d'un pare-brise 22 gelé par temps de grand froid. Cette configuration a par exemple été représentée à la figure 5, qui représente une lame 42 dont le talon 40 et la lèvre 46 comportent le matériau thermoconducteur 48. Le détail du matériau thermoconducteur métallique 48 de ce mode de réalisation sera décrit ultérieurement dans la suite de la présente description.

De préférence, le matériau thermoconducteur 48 métallique présente une conductivité thermique supérieure à 100W/mK.

Par exemple, le matériau thermoconducteur comporte du cuivre, de l'aluminium ou de l"argent.

Selon un premier mode de réalisation de la lame 42 qui a été représenté sur les figures 2 et 3, un matériau élastomère de la lame 42 comporte le matériau thermoconducteur métallique 48. Le matériau thermoconducteur métallique est intégré au matériau élastomère avant son injection ou son extrusion de manière à favoriser sa présence dans l'ensemble du corps de la lame 42 et sa répartition homogène au sein du matériau élastomère.

Dans une première variante de ce premier mode de réalisation, qui a été représenté à la figure 2, la lame 42 comporte de manière connue entre le talon 42 et la lèvre 46 une zone d'étranglement 49 de largeur réduite, aussi connue sous le nom de charnière, qui est destinée à conférer une souplesse à la lèvre 46 par rapport au talon 40.

En effet, on sait que pour obtenir une qualité d'essuyage maximale, il est essentiel que l'inclinaison de l'extrémité libre 50 de la lèvre 46, par rapport au pare-brise, soit maintenue au voisinage d'une valeur optimale donnée, comme représenté à la figure 1. C'est pourquoi la lame 42 comporte une charnière 49 permettant l'articulation de la lèvre 46 par rapport au talon 40, la lèvre 46 comportant dans sa partie supérieure des ailes 52 qui viennent se caler systématiquement contre des ailes inférieures 53 du talon 40 dès lors que le balai 10 est déplacé latéralement au contact du pare-brise 22. Le calage s'opère alternativement d'un côté ou de l'autre de la lame 42 en fonction de la direction de déplacement effective du balai 10, l'inversion du sens de balayage imposant un basculement de la lame d'essuyage 42 et de sa lèvre 46 d'une position de calage à l'autre.

Dans des conditions atmosphériques plus froides, pour éviter une dégradation rapide du matériau élastomère de la lame 42, il est connu de se dispenser de cette charnière 49, comme représenté à la figure 3. Cette configuration permet de proposer une section de passage des calories plus grande au niveau de l'emplacement conventionnel de la charnière, et donc de favoriser le passage des calories jusqu'à l'extrémité de la lèvre 46.

Selon un deuxième mode de réalisation de l'invention qui a été représenté aux figures 4 à 8, la lame 42 comporte un revêtement en matériau thermoconducteur métallique 48 qui recouvre la lame 42.

Selon une première variante de ce deuxième mode de réalisation qui a été représentée à la figure 4, seul le talon 40 est revêtu du matériau 48. Cette configuration permet de collecter efficacement les calories provenant de l'élément chauffant 36.

Selon une deuxième variante de ce deuxième mode de réalisation qui a été représentée à la figure 5, le talon 40 et la lèvre 46 sont revêtus du matériau 48. Cette configuration permet de collecter efficacement les calories provenant de l'élément chauffant 36 et de les acheminer jusqu'à la lèvre 46.

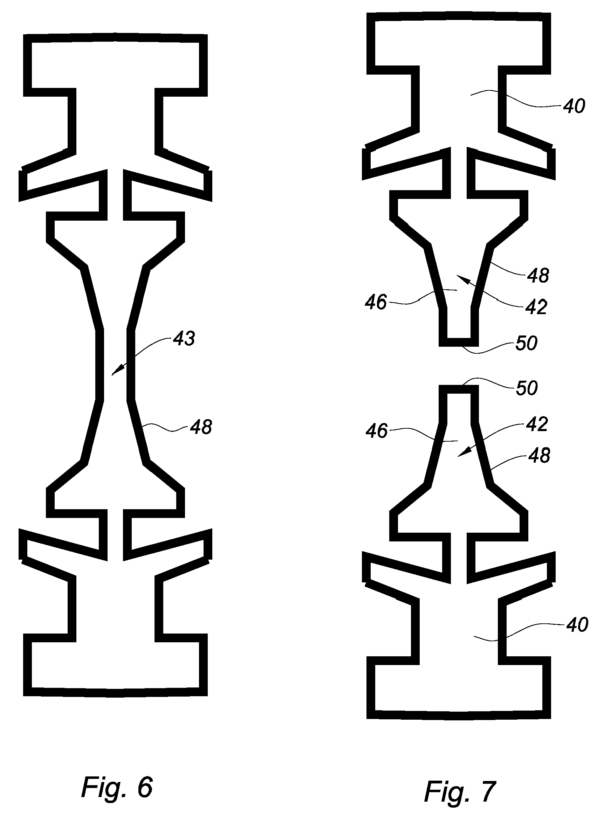

Le matériau thermoconducteur peut ou non recouvrir l'extrémité 50 de la lèvre 46 qui est au contact du pare-brise 22. Par exemple, dans la deuxième variante du deuxième mode de réalisation qui a été représentée à la figure 5, l'extrémité 50 de la lèvre 46, comme le reste de la lèvre 46, est recouverte du revêtement thermoconducteur 48. Selon une troisième variante du deuxième mode de réalisation qui a été représentée aux figures 6 et 7, l'extrémité 50 est, pour des considérations propres à l'efficacité de l'essuyage du pare-brise 22, dépourvue de ce revêtement thermoconducteur 48.

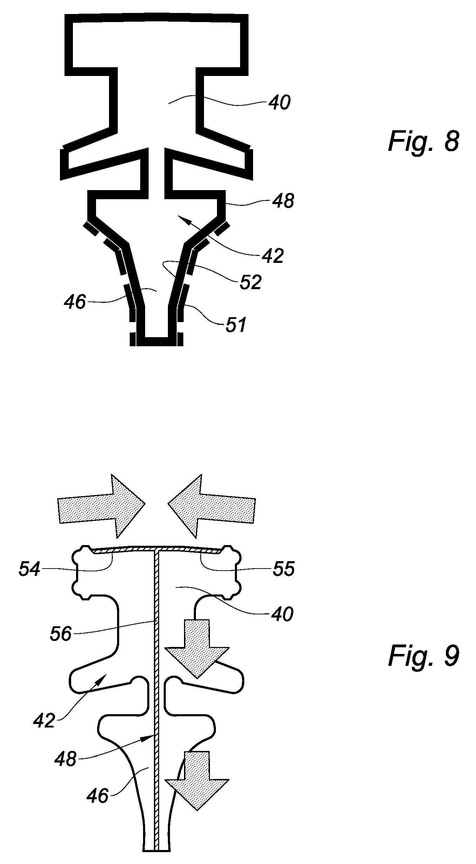

Selon une troisième variante du deuxième mode de réalisation de la lame 42 qui a été représenté à la figure 8, le matériau thermoconducteur 48 revêt des flancs latéraux 52 de la lèvre 46 et lesdits flancs 52 sont recouverts d'un matériau 51 de protection dudit deuxième matériau 48 thermoconducteur. Cette configuration permet de protéger le revêtement thermoconducteur 48 des agressions extérieures, mais aussi de protéger la vitre du véhicule contre l'agression du matériau thermoconducteur métallique, qui pourrait par exemple provoquer l'apparition de rayures sur ladite vitre.

Dans toutes les variantes du deuxième mode de réalisation, pour réaliser le revêtement thermoconducteur 48, on utilise par exemple une composition comportant une poudre métallique, dispersée en solution dans un liquide vecteur, et un agent gélifiant. Le revêtement en phase liquide est d'abord déposé sur les parties de la lame 42 que l'on désire traiter. Par exemple, il est possible d'enduire la lame 42 d'essuyage, ou de l'immerger dans la composition, ou encore de pulvériser la composition sur la lame 42.

Puis, on opère un séchage du revêtement. Le séchage est réalisé à l'air libre ou, en variante, sous un flux d'air chaud de séchage, pour accélérer le séchage.

Des procédés de fabrication différents sont utilisés selon que l'on désire que l'extrémité 50 de la lame 42 soit ou non pourvue du revêtement 48 thermoconducteur.

Si l'on désire obtenir une lame 42 dont l'extrémité 50 est recouverte du matériau thermoconducteur, comme représenté à la figure 5, on recouvre simplement la lame 42 de la composition, comme expliqué précédemment, puis on la fait sécher.

En revanche, si l'on désire obtenir une lame 42 dont l'extrémité 50 est dépourvue du matériau thermoconducteur, comme représenté à la figure 7, on utilise une composition du type décrit précédemment, pour la déposer non pas sur une lame 42 de type simple, mais sur une jumelle 43 telle que représentée à la figure 6, qui comporte deux lames d'essuyage 42 réunies par leurs lèvres 46. La jumelle 43 est réalisée d'une seule pièce par injection.

La jumelle 43 est enduite avec la composition, ou immergée dans la composition, ou recouverte par pulvérisation, comme représenté à la figure 6. Puis on fait sécher la jumelle 43, et on découpe la jumelle 43 à la jonction des deux lèvres 46 pour obtenir deux lames 42 dépourvues de revêtement du deuxième matériau à l'extrémité 50 de leurs lèvres 46, comme représenté à la figure 7. La découpe est de préférence effectuée par un procédé de découpe laser, pour garantir la précision de la découpe.

Toutefois la découpe peut également être effectuée par un procédé de découpe mécanique plus conventionnel, tel qu'un procédé de découpe à l'aide d'une lame tranchante.

Selon un troisième mode de réalisation qui a été représenté à la figure 9, la lame 42 comporte un insert métallique en matériau thermoconducteur 48 qui est intégré dans ladite lame 42.

Comme l'illustre la figure 9, l'insert métallique 48 en matériau thermoconducteur comporte au moins une première partie 54 qui s'étend au contact d'une surface d'extrémité libre 55 du talon 40 et au moins une seconde partie 56, de préférence solidaire de la première partie 54 pour favoriser la conduction des calories, qui s'étend dans l'épaisseur de la lame 42. La première partie 54 permet de collecter les calories à proximité de l'élément chauffant 36 qui est reçu dans le corps principal 16 du balai.

La seconde partie 56 s'étend suivant l'orientation générale de la lame 42, sensiblement suivant une ligne médiane de la lame 42 en direction d'une extrémité de la lèvre 46 afin d'acheminer les calories vers les parties inférieures de la lame 42 et ce, uniformément dans toute l'épaisseur de la lame 42.

Il sera compris que, de préférence, la seconde partie 56 de l'élément métallique s'étend au moins en partie dans la lèvre 46 afin d'acheminer les calories au plus près de l'extrémité 50 de la lèvre 46.

Une telle lame 42 est obtenue par un procédé de fabrication au cours duquel on extrude ou injecte un matériau élastomère de la lame 42 autour de l'insert métallique 48. Ce procédé permet de garantir une adhésion satisfaisante de l'insert métallique 48 au contact du matériau élastomère.

Bien entendu, dans le cas où la seconde partie 56 s'étend dans la lèvre 46, on s'attachera à ce que cette seconde partie 56 présente des caractéristiques de flexion aptes à accompagner le basculement de la lèvre 46, comme expliqué précédemment.

L'invention permet d'améliorer de manière efficace la transmission des calories au sein d'une lame 42 d'un balai 10 d'essuie-glace.

Une telle lame 42 permet d'équiper avantageusement un balai 10 d'essuie-glace du type décrit précédemment, et par conséquent d'en améliorer sensiblement les performances de réchauffage.

## Revendications

1. Lame d'essuyage (42) pour un balai d'essuie-glace, comportant au moins un talon (40) supérieur et une lèvre inférieure (46) s'étendant à partir du talon (40) et qui est destinée à venir en contact avec une surface (22) à essuyer, **caractérisée en ce qu'**au moins une partie de la lame (42) comprend un matériau thermoconducteur (48) métallique, et/ou est recouverte d'un matériau thermoconducteur métallique.

2. Lame d'essuyage (42) selon la revendication précédente, **caractérisée en ce qu'**au moins le talon (40) comprend ledit matériau thermoconducteur (48) métallique et/ou est recouvert dudit matériau thermoconducteur métallique.

3. Lame d'essuyage (42) selon la revendication 1 ou 2 précédente, **caractérisée en ce que** la lèvre (46) comprend ledit matériau thermoconducteur (48) métallique et/ou est recouverte dudit matériau thermoconducteur métallique.

4. Lame d'essuyage (42) selon l'une des revendications précédente, **caractérisée en ce que** le matériau thermoconducteur (48) métallique présente une conductivité thermique supérieure à 100W/mK.

5. Lame d'essuyage (42) selon l'une des revendications précédente, **caractérisée en ce que** le matériau thermoconducteur (48) comporte du cuivre, de l'aluminium ou de l'argent.

6. Lame d'essuyage (42) selon l'une des revendications 1 à 5, **caractérisée en ce qu'**un matériau élastomère de la lame (42) comporte le matériau thermoconducteur (48) métallique.

7. Lame d'essuyage (42) selon l'une des revendications 1 à 6, **caractérisée en ce qu'**elle comporte un revêtement en matériau thermoconducteur (48) métallique recouvrant ladite lame (42).

8. Lame d'essuyage (42) selon la revendication précédente, **caractérisée en ce que** le matériau thermoconducteur (48) métallique est un dépôt d'une composition de particules métalliques en solution.

9. Lame d'essuyage (42) selon l'une des revendications précédentes, **caractérisée en ce que** des flancs latéraux (52) de la lèvre (46) sont revêtus du matériau thermoconducteur métallique (48) et **en ce que** lesdits flancs (52) sont recouverts d'un matériau (51) de protection dudit matériau thermoconducteur (48) métallique.

10. Lame d'essuyage (42) selon l'une des revendications précédentes, **caractérisée en ce qu'**elle comporte un insert métallique en matériau thermoconducteur (48) métallique intégré dans ladite lame (42).

11. Lame d'essuyage (42) selon la revendication précédente , **caractérisée en ce que** l'insert métallique (48) comporte au moins une première partie (54) qui s'étend au contact d'une surface d'extrémité libre (55) du talon (40) et une seconde partie (56), qui s'étend dans l'épaisseur de la lame (42).

12. Lame d'essuyage (42) selon la revendication précédente caractérisée en la seconde partie (56) s'étend suivant l'orientation générale de la lame (42), sensiblement suivant une ligne médiane de la lame (42), en direction d'une extrémité de la lèvre (46).

13. Lame d'essuyage (42) selon la revendication 11 ou 12, **caractérisée en ce que** la seconde partie (56) de l'insert métallique (48) s'étend au moins en partie dans la lèvre (46).

14. Procédé de fabrication d'une lame d'essuyage (42) selon l'une des revendications précédentes, **caractérisé en ce que** l'on prépare une composition thermoconductrice comportant une poudre métallique, dispersée en solution dans un liquide vecteur et un agent gélifiant, puis on enduit au moins une partie de la lame (42) d'essuyage avec ladite composition, ou on immerge ladite au moins une partie de la lame (42) dans ladite composition, ou on pulvérise ladite composition sur ladite au moins une partie de lame d'essuyage (42), puis **en ce que** l'on fait sécher ladite lame d'essuyage (42).

15. Procédé selon la revendication précédente, **caractérisé en ce que** l'on fait sécher la lame (42) à température ambiante ou sous un flux d'air chaud de séchage.

16. Procédé selon la revendication 14 ou 15, **caractérisé en ce que** l'étape d'induction, d'immersion ou de pulvérisation est réalisée pour revêtir une jumelle (43) comportant deux lames d'essuyage (42) réunies par leurs lèvres (46), le procédé comportant en outre une étape de découpe de la jumelle (43) à la jonction des deux lèvres (46) pour obtenir deux lames (42).

17. Procédé de fabrication d'une lame d'essuyage (42) selon l'une des revendications 14 à 16, **caractérisé en ce que** l'on extrude ou injecte un matériau élastomère de la lame (42) autour d'un insert métallique (48) en matériau thermoconducteur.

18. Balai (10) d'essuie-glace, en particulier de véhicule automobile, comportant au moins un corps principal (16) qui reçoit au moins un élément chauffant (36) qui s'étend sensiblement sur la longueur du balai (10), et une lame d'essuyage (42) selon l'une des revendications 1 à 13 dont le talon (40) est reçu dans ledit corps principal (16).
